# EUROPEAN PATENT SPECIFICATION

(11) **EP 3 742 566 B1**
(45) Date of publication and mention of the grant of the patent: **15.02.2023**
(21) Application number: 19176055.2
(22) Date of filing: 23.05.2019
(51) Int. Cl.: H02B 1/052

(54) **ADJUSTABLE DIN RAIL SYSTEM**
VERSTELLBARES DIN-SCHIENENSYSTEM
SYSTÈME DE RAIL DIN RÉGLABLE

(43) Date of publication of application: 25.11.2020
(73) Proprietor: ABB Schweiz AG, 5400 Baden (CH)
(72) Inventor: Weber, Erik, 67850 Offendorf (FR)
(74) Representative: Wesch, Arno

(56) References cited:
- EP-A1- 1 615 308
- EP-A1- 1 693 937
- EP-A1- 1 944 843
- ES-A1- 2 330 817

## Description

The invention is related to a device according to the preamble of claim 1, comprising at least one fixation bracket to be mounted within a cabinet or on a wall and to bear a DIN rail, which is connectable with the fixation bracket by an intermediate member.

ES 2 330 817 A1 and EP 1 944 843 A1 show a device with an intermediate member, which is locked by a separate clip or spring. EP 1 693 937 A1 shows a device wherein an elastic tongue is provided with a manual gripping element.

DIN rails are mounted within a cabinet, especially within a distribution cabinet, and bear electrical components like circuit breakers. These electrical components have to be arranged sometimes deeper within the inner space of the cabinet and sometimes closer to the door of the cabinet.

Currently, adjustable DIN rail modules often are fixed by screws. Such screws must be unscrewed by a tool to slide the DIN rail into or out of a cabinet. Therefore, any user, especially an electrician, has problems to adjust a DIN rail in the depth, to which a breaker shall be connected.

The object of the invention therefore is to develop a DIN rail system, which is adjustable with respect to the position of the DIN rail in an easy and quick manner.

The object of the invention is achieved by means of the features of claim 1.

According to this claim the intermediate member is a compensation bracket, which is connected at one section with the fixation bracket and at another section is optionally connectable with the DIN rail, wherein the compensation bracket is movable and may be shifted relative to the fixation bracket without unlocking of a screw and/ or without disassembling of the device.

According to the invention it has been found that the position of a DIN rail or another component may be adjusted easily in the depth of an existing arrangement without disassembling too many parts. The device to adjust a DIN rail system in the depth without disassembling, comprises at least one fixation bracket and at least one compensation bracket, wherein the compensation bracket may be moved or shifted without disassembling these at least two parts of the device.

According to the invention, the DIN rail is connected with the fixation bracket by the compensation bracket, which is connected at one section with the fixation bracket and at another section with the DIN rail, wherein the DIN rail is movable and may be shifted relative to the fixation bracket without unlocking of a screw and/ or without disassembling of the device. In this case the device at least comprises three parts, namely a fixation bracket, a compensation bracket and the DIN rail.

The device comprises preferably two compensation brackets, which are received in two fixation brackets and may be fixed on an enclosure support. The compensation brackets receive the DIN rail. The DIN rail then may be shifted into a cabinet or out of a cabinet without separating the DIN rail from the compensation brackets and without separating the compensation brackets from the fixation brackets. The adjusting of the DIN rail using compensation brackets gives the possibility to adjust the position of the DIN rail in the depth without unmounting these five parts.

The compensation bracket has at least one flexible tongue, which may be bent or moved to unlock the compensation bracket and/ or the DIN rail and to shift the compensation bracket and/ or the DIN rail within and/ or relative to the fixation bracket. A flexible tongue acts like a spring and can return to a locking position without any help. The flexible tongue has only to be bent or moved when the compensation bracket shall be moved in the depth, namely in a z-direction.

The compensation bracket comprises at least one punch, which removably and/ or like a spring extends into a recess of the fixation bracket to lock the compensation bracket. A punch also can return into a locking position like a spring. A punch may act as a bolt, which allows a moving only in one direction namely into the depth, but not in other directions.

Advantageously, the fixation bracket comprises several recesses to receive the punch of the compensation bracket at several positions of the compensation bracket within and/ or relative to the fixation bracket. The recess in the fixation bracket may be stamped and may have the shape of a circle, wherein two recesses are connect. ed by a slot shaped channel to develop a sliding guide. Preferably, the fixation bracket has three recesses corresponding to three locations on which the compensation bracket may be fixed or may be locked.

The tongue has two flaps which may be gripped by a tool to bend the tongue and to unlock the compensation bracket. A flap may be stamped or drilled into the material of the compensation bracket. A flap prevents a tool from slipping off and can be developped as a closed loop. Two flaps are arranged above each other. Through this, the staff can reach the flap from above or from the bottom.

Advantageously, the punch protrudes from the tongue into a recess of the fixation bracket. Through this, the punch may be removed from the recess by bending the tongue. Preferably, the compensation bracket is connected to the fixation bracket in a sliding guide, wherein it is blocked by the punch. To unlock the compensation bracket, the tongue need to be pushed or drawn inside or inwards to release the fixation, The metal tongue may be bent inwards along an extension of 2 to 3 mm.

The compensation bracket is configured to
be unlocked to be shifted within the fixation bracket
by the use of a flat screw driver or another means being able to engage a flap or an opening without screwing. Through this an electrician, who often has a flat screw driver on him, may bend the tongue inwards in an easy manner.

Advantageously, the compensation bracket is engaged in a guidance of the fixation bracket and is movable only in one direction being engaged in the said guidance. Through this, the compensation bracket is fixed and hold in two directions and can not get out of place in other directions, which differ from the z-direction, namely the shift direction into the depth of a cabinet.

Further advantageously, the compensation bracket has at least one strip which is overlapped by sprockets of the fixation bracket. Sprockets or teeth may be stamped or bent out of the material of the fixation bracket and can act has hooks.

Advantageously, the compensation bracket has two parallel strips, each of which is overlapped by sprockets of the fixation bracket, wherein an upper strip rests on upper sprockets and a lower strip protrudes into the sprockets to prevent the strips from moving up or down. Through this, the compensation bracket is fixed and hold in two directions by two rows of hook-shaped sprockets and cannot get out of place in other directions, which differ from the z-direction, namely the shift direction into the depth.

Further advantageously, the compensation bracket has two parallel strips between which a flexible tongue is located. Through this, the compensation bracket can be produced, preferably by stamping, in an easy manner.

Advantageously, the DIN rail is plugged on an outer side of the compensation bracket. Through this, no screws are necessary to mount the DIN rail on the compensation bracket.

Further advantageously, the DIN rail is screwed on an outer side of the compensation bracket. Through this, the DIN rail may be mounted in a reversible manner to the compensation bracket.

The device described here may be used to be mounted on a wall or in a cabinet. Circuit breakers or other electrical components may be arranged on the DIN rail. The DIN rail preferably is a rail which is standardized according to a DIN standard but may also be another rail which is adapted to bear electrical components and/ or is not standardized.

Preferably the compensation bracket, the fixation bracket and the DIN rail are made of a metal. Especially the flexible tongue of the compensation bracket is made of metal.

In the drawings:
- Fig. 1: shows a perspective view of an adjustable DIN rail system, comprising a device, having two fixation brackets, a DIN rail and two compensation brackets, wherein the device is fixed in a distribution cabinet.
- Fig. 2: shows a sectional view of the device, having a compensation bracket, a DIN rail and a fixation bracket,
- Fig. 3: shows a further perspective view of the device according to Fig. 1, wherein a flat screw driver is used to release the compensation brackets and then to slide them together with the DIN rail in the fixation brackets,
- Fig. 4: shows a compensation bracket, which is in an outer position and is able to be shifted into the fixation bracket being engaged with the fixation bracket and not being separated from the fixation bracket,
- Fig. 5: shows the compensation bracket of Fig. 4, which is in the outer position and is able to be shifted into the fixation bracket, in a plan view from the inside of the device or of the fixation bracket and the compensation bracket,
- Fig. 6: shows the compensation bracket of Fig. 4, which is in the outer position and is able to be shifted into the fixation bracket, in a plan view from the outside of the device or of the fixation bracket,
- Fig. 7: also shows the compensation bracket of Fig. 4, which is in the outer position and is able to be shifted into the fixation bracket, in a plan view from the outside of the device or of the fixation bracket,
- Fig. 8: shows a flat screw driver engaging a lower flap of the compensation bracket to unlock the compensation bracket and to shift it into the fixation bracket,
- Fig. 9: shows the compensation bracket locked and shifted into the fixation bracket and located in an inner position,
- Fig. 10: shows the compensation bracket of Fig. 9, which is in the inner position and is no longer able to be shifted into the fixation bracket, in a plan view from the outside of the device or of the fixation bracket,
- Fig. 11: shows a device comprising a DIN rail, which is plugged on a compensation bracket, and
- Fig. 12: shows a device comprising a DIN rail, which may be screwed on a compensation bracket.

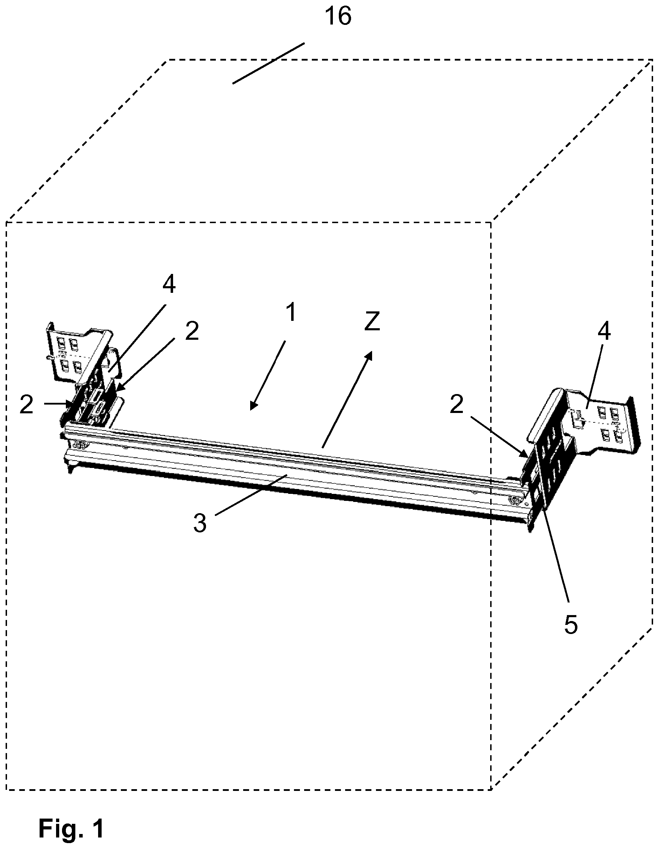

Fig. 1 shows a device 1, comprising at least one fixation bracket 4 to be mounted within a cabinet 16 and an intermediate member, wherein the intermediate member is a compensation bracket 2, which is connected at one section of the compensation bracket 2 with the fixation bracket 4. The compensation bracket 2 is movable and may be shifted relative to the fixation bracket 4 without unlocking of a screw and/ or without disassembling of the device 1, comprising at least these two brackets 2, 4.

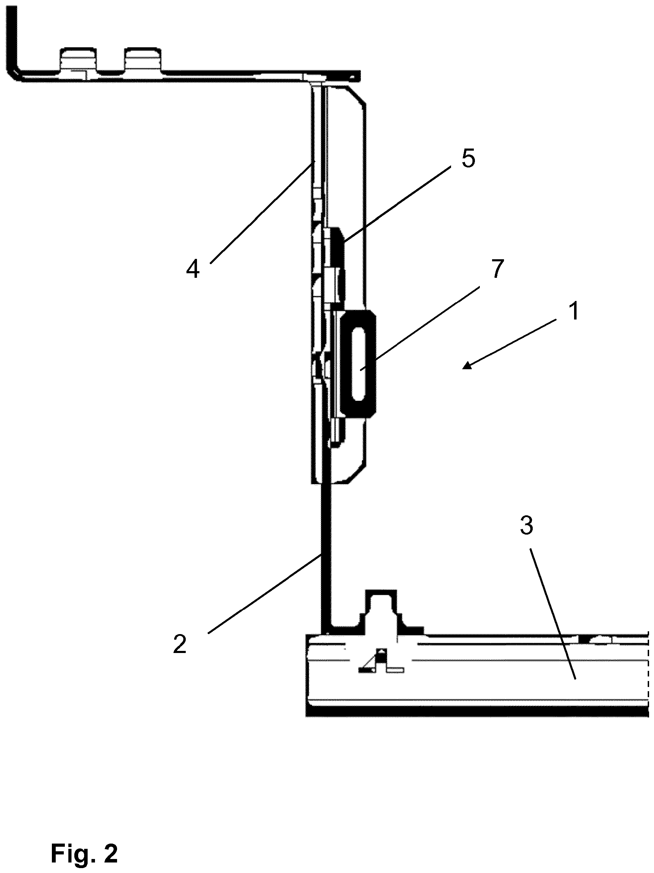

Further, Figs. 1 and 2 show a device 1, comprising at least one fixation bracket 4 to be mounted within a cabinet 16 or on a wall and a DIN rail 3, which is already connected with the fixation bracket 4 by the intermediate member. The intermediate member is the compensation bracket 2, which is connected at one section of the compensation bracket 2 with the fixation bracket 4 and at another section of the compensation bracket 2 with the DIN rail 3.

The DIN rail 3 is movable and may be shifted relative to the fixation bracket 4 without unlocking of a screw and/ or without disassembling of the device 1. This device 1 comprises at least three parts, which need not to be disassembled to shift the DIN rail 3 and the compensation bracket 2. The DIN rail 3 and the compensation bracket 2 may be shifted in z-direction Z, without being disassembled.

The compensation bracket 2 has at least one flexible tongue 5, which may be bent or moved to unlock the compensation bracket 2 and to shift the compensation bracket 2 and the DIN rail 3 within and relative to the fixation bracket 4 into the z-direction Z.

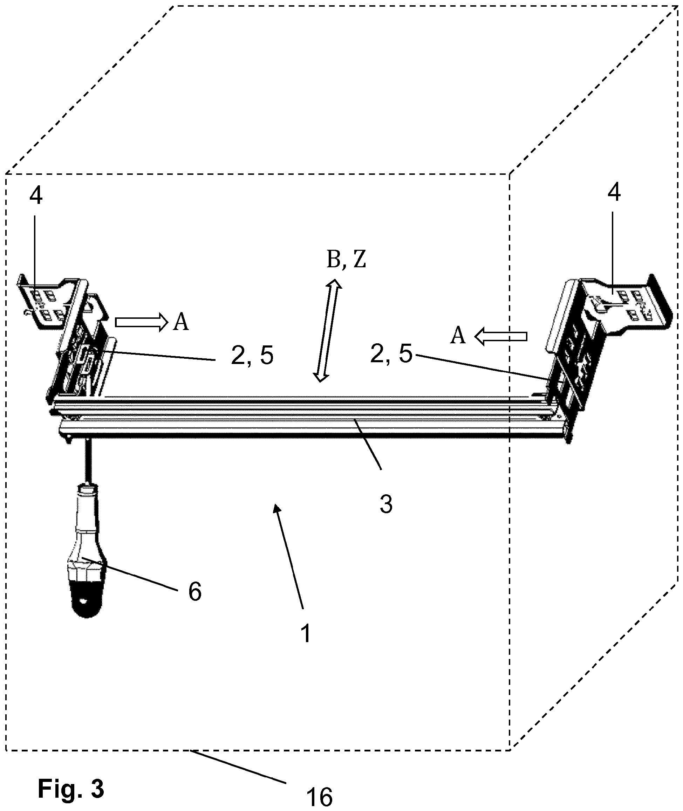

Fig. 1 and 3 show that a DIN rail 3 is connected to two compensation brackets 2, wherein each compensation bracket 2 is connected to a fixation bracket 4. The DIN rail 3 is mounted to the fixation brackets 4 via the compensation brackets 2. The compensation brackets 2 act as intermediate members. Insofar Fig. 1 shows a device 1 which comprises five parts, namely four brackets 2, 4 and one DIN rail 3, which need not to be disassembled. These five parts can be engaged while moving the compensation brackets 2 and the DIN rail 3.

The DIN rail 3 may be screwed or clipped on or plugged on an outer side of the compensation bracket 2. The DIN rail 3 may be force-fitted to the compensation bracket 2 or may be form-fitted to the compensation bracket 2. The DIN rail 3 is removable in a reversible manner from each compensation bracket 2.

Fig. 2 shows a sketch of the device 1 comprising a DIN rail 3, which is connected to a compensation bracket 2 on one section of the compensation bracket 2, wherein another section of the compensation bracket 2 is fixed at the fixation bracket 4.

Fig. 3 schematically shows a method of shifting a DIN rail 3 in the depth, preferably in a cabinet 16.

In a first step A the tongues 5 of the compensation brackets 2 are bent inwards in the direction of the arrows to unlock the compensation brackets 2 and to make them movable. In a second step B the DIN rail 3 together with the compensation brackets 2 are moved in z-direction Z, namely in the depth.

Preferably, before step A is done, the DIN rail 3 had been mounted on the compensation brackets 2. Then the DIN rail 3 together with the compensation brackets 2 are shifted into the fixation brackets 4 as described with respect to steps A and B. Preferably, step A may be done using a flat screw driver 6.

It is also possible that the compensation brackets 2 and the fixation brackets 4 build an assembled device 1 alone and the compensation brackets 2 are shifted without a DIN rail 3 connected with them. The DIN rail 3 can be arranged after the compensation brackets 2 have been located in a desired position.

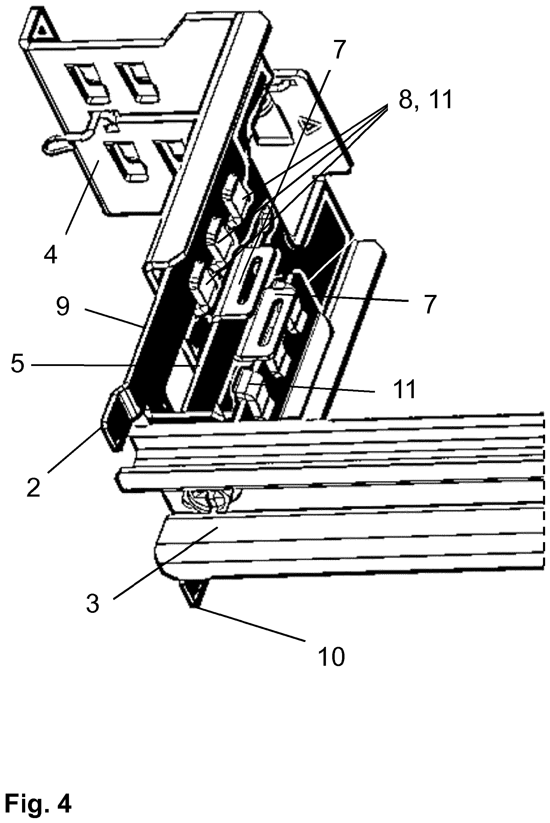

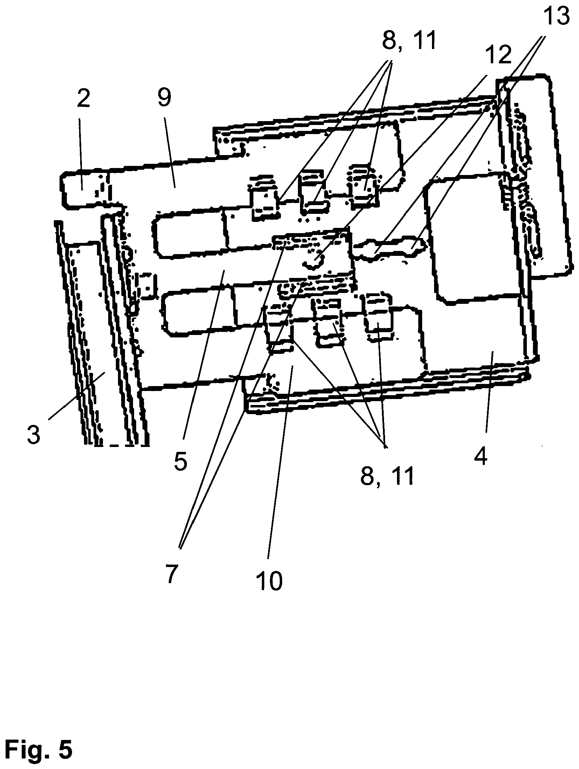

Figs. 4 and 5 show that the tongue 5 has two flaps 7 which may be gripped by a tool, especially by a flat screw driver 6, to bend the tongue 5 and to unlock the compensation bracket 5. Each flap 7 develops a closed loop.

The compensation bracket 2 is engaged in a guidance 8 of the fixation bracket 4 and is movable only in one direction being engaged in the said guidance 8. The compensation bracket 2 has two strips 9, 10, which are overlapped by hook-shaped sprockets 11 of the fixation bracket 4.

The compensation bracket 2 has two parallel strips 9, 10 each of which is overlapped by hook-shaped sprockets 11 of the fixation bracket 4, wherein an upper strip 9 rests on upper sprockets 11 and a lower strip 10 protrudes into lower sprockets 11 to prevent the strips 9, 10 from moving up or down. The compensation bracket 2 has two parallel strips 9, 10 between which a flexible tongue 5 is located.

Fig. 5 shows, that the compensation bracket 2 comprises at least one punch 12 which removably extends into a recess 13 of the fixation bracket 4 to lock the compensation bracket 2. The fixation bracket 4 comprises three recesses 13 to receive the punch 12 of the compensation bracket 2 at several positions of the compensation bracket 2 within and relative to the fixation bracket 4.

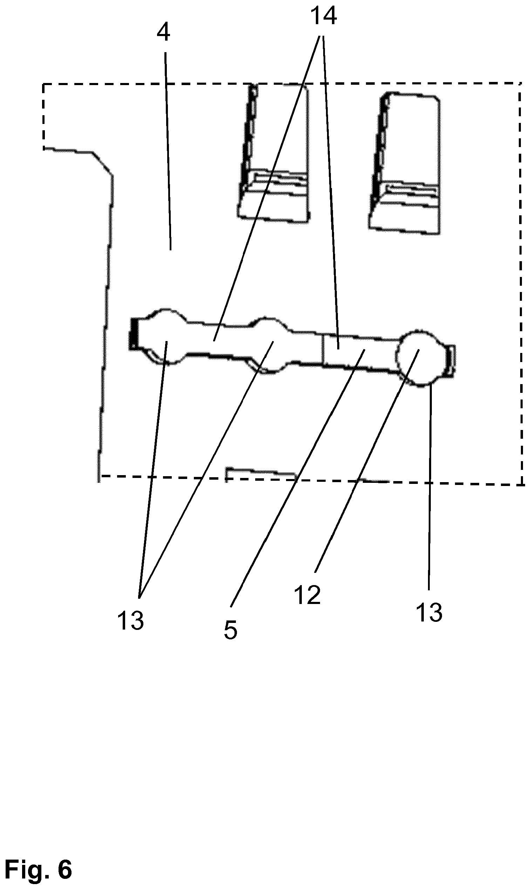

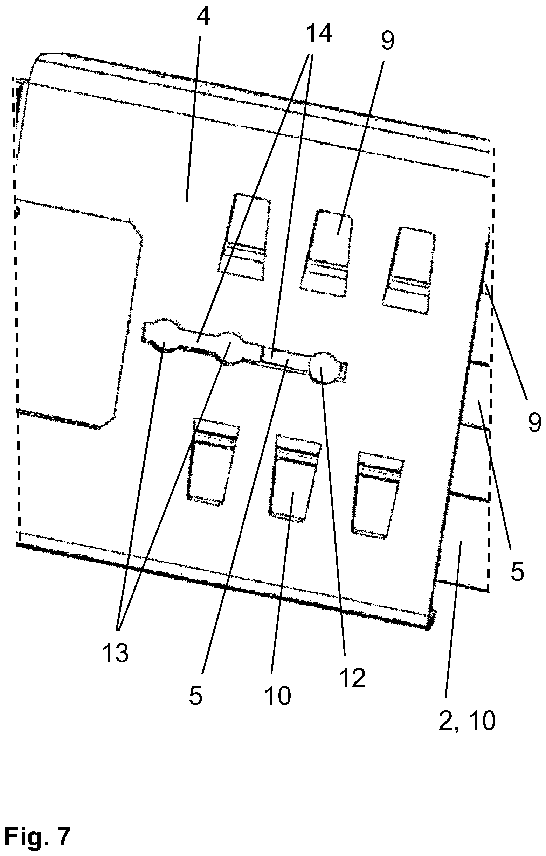

Figs. 6 and 7 show in a view on the outer side of the fixation bracket 4, that the punch 12 protrudes from the tongue 5 into a recess 13 of the fixation bracket 4. The compensation bracket 2 is located and locked in an outer position or in a pulled out position.

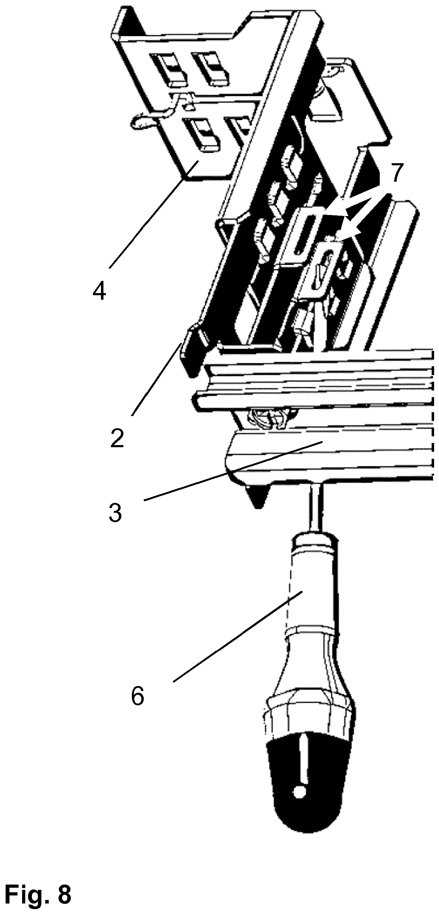

Fig. 8 shows, that the compensation bracket 2 may be unlocked to be shifted within the fixation bracket 4 by the use of a flat screw driver 6 or another means being able to engage the loop of the flap 7 or an opening without screwing.

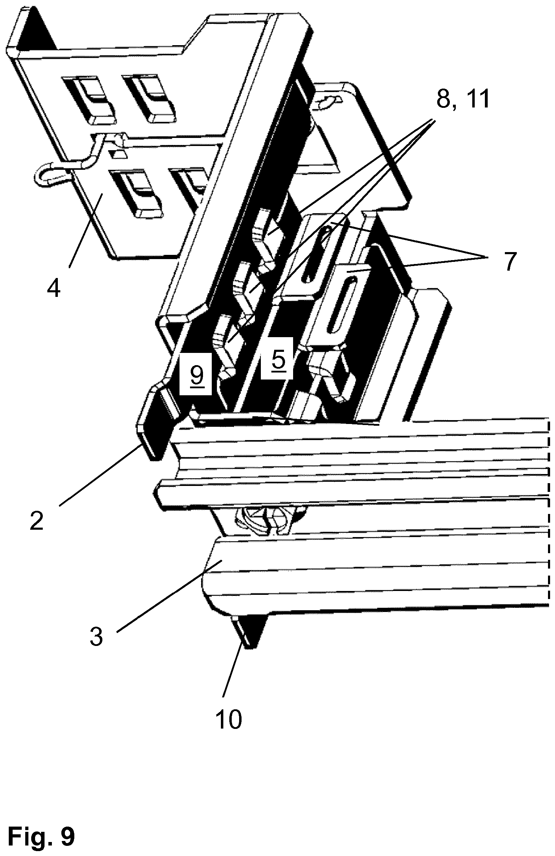

Fig. 9 shows, that the compensation bracket 2 has been shifted into the fixation bracket 4 and is located and locked at its inner position or inserted position.

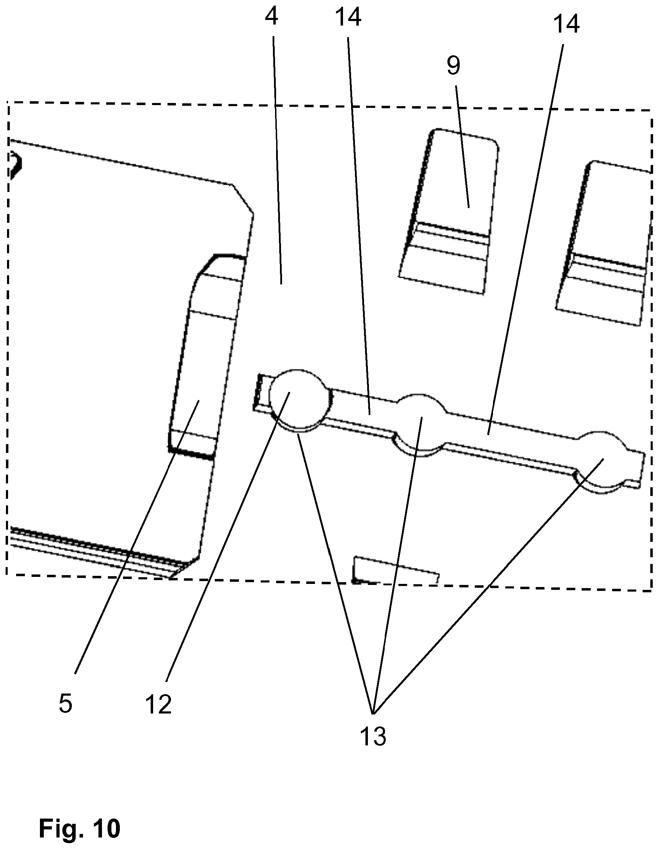

Fig. 10 shows a view on the outer side of the fixation bracket 4. The tongue 5 is on the inner side of the fixation bracket 4. The compensation bracket 2 is located and locked in its inner position or inserted position.

Fig. 6, 7 and 10 show from this outer side that each compensation bracket 2 is guided in the fixation bracket 4. The compensation bracket 2 may be slided or shifted relative to the fixation bracket 4, wherein the compensation bracket 2 and the fixation bracket 4 are engaged or mesh with each other.

Fig. 6, 7 and 10 show that the compensation bracket 2 is locked at the fixation bracket 4 using a spring-like or clip-like punch 12 engaging a stamped out recess 13. The punch 12 may be kept out from engaging by a channel or slot 14, which is more narrow than the recess 13. Through this, the punch 12 latches in the recess 13 like a spring or a clip and fixes the compensation bracket 2 on a desired position when it is able to engage and protrude into a recess 13.

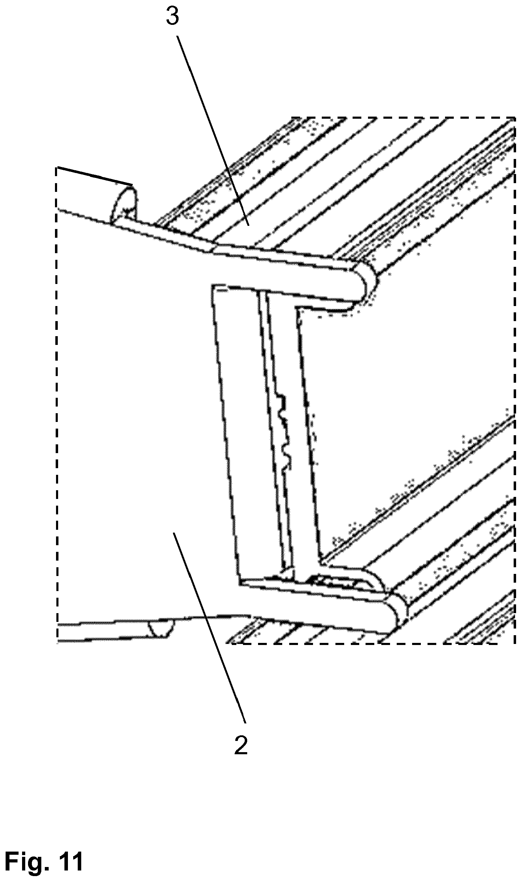

Fig. 11 shows, that the DIN rail 3 is plugged on an outer side of a compensation bracket 2.

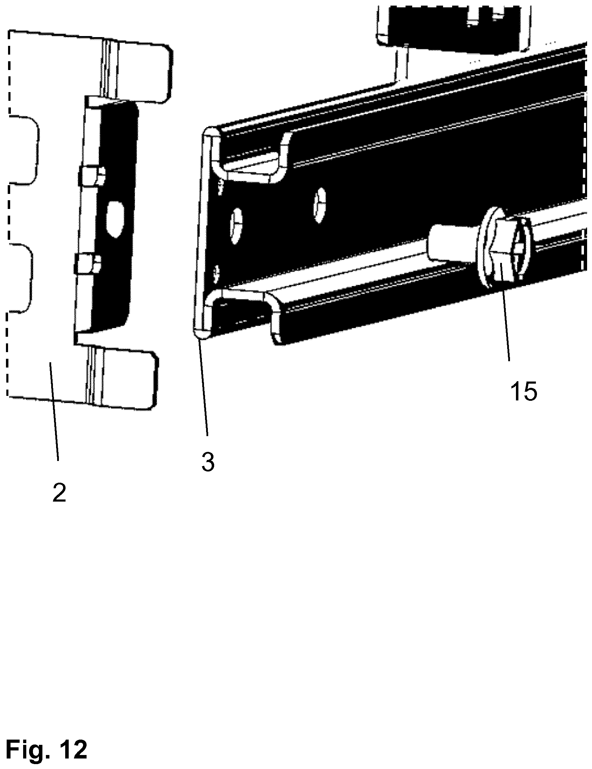

Fig. 12 shows, that the DIN rail 3 may be screwed on an outer side of a compensation bracket 2 by a screw 15.

Fig. 3 schematically shows, that the device 1 is mounted within a cabinet 16 to house electrical components. Circuit breakers or other electrical components may be arranged on the DIN rail 3. The DIN rail 3 preferably is a rail which is standardized according to a DIN standard but may also be another rail which is adapted to bear electrical components. The DIN rail 3 may be mounted to flanges of the compensation brackets 2.

**Reference numbers**

| | |
|---|---|
| 1 | Device |
| 2 | Compensation bracket |
| 3 | DIN rail |
| 4 | Fixation bracket |
| 5 | Tongue of 2 |
| 6 | Flat screw driver |
| 7 | Flap of 5 |
| 8 | Guidance of 4 |
| 9 | Upper strip of 2 |
| 10 | Lower strip of 2 |
| 11 | Sprocket of 4 |
| 12 | Punch of 5 |
| 13 | Recess of 4 |
| 14 | Slot |
| 15 | Screw |
| 16 | Cabinet |

## Claims

1. Device (1), comprising a DIN rail (3), an intermediate member and at least one fixation bracket (4) to be mounted within a cabinet (16) or on a wall and to bear the DIN rail (3), which is connected with the fixation bracket (4) by the intermediate member, wherein the intermediate member is a compensation bracket (2), which is connected at one section with the fixation bracket (4) and at another section is connectable with the DIN rail (3), wherein the compensation bracket (2) is movable and may be shifted relative to the fixation bracket (4) without unlocking of a screw and/ or without disassembling of the device (1),
**characterized in that**
the compensation bracket (2) has at least one flexible tongue (5), which is configured to be bent or moved to unlock the compensation bracket (2) and
the
DIN rail (3) and to shift the compensation bracket (2) and/ or the DIN rail (3) within and/ or relative to the fixation bracket (4), wherein the compensation bracket (2) comprises at least one punch (12), which removably and/ or like a spring extends into a recess (13) of the fixation bracket (4) to lock the compensation bracket (2), wherein the tongue (5) has two flaps (7), wherein the two flaps (7) are arranged above each other, and are configured to be gripped by a tool to bend the tongue (5) and to unlock the compensation bracket (2), and wherein the compensation bracket (2) is configured to be unlocked to be shifted within the fixation bracket (4) by the use of a flat screw driver (6) or another means being able to engage the flaps (7) without screwing.

2. Device according to claim 1, **characterized in that** the DIN rail (3) is connected with the fixation bracket (4) by the compensation bracket (2), wherein the compensation bracket (2) is connected at one section with the fixation bracket (4) and at another section with the DIN rail (3) and wherein the DIN rail (3) is movable and may be shifted relative to the fixation bracket (4) without unlocking of a screw and/ or without disassembling of the device (1).

3. Device according to claim 1 or 2, **characterized in that** the fixation bracket (4) comprises several recesses (13) to receive the punch (12) of the compensation bracket (2) at several positions of the compensation bracket (2) within and/ or relative to the fixation bracket (4).

4. Device according to one of the preceding claims, **characterized in that** the punch (12) protrudes from the tongue (5) into a recess (13) of the fixation bracket (4).

5. Device according to one of the preceding claims, **characterized in that** the compensation bracket (2) is engaged in a guidance (8) of the fixation bracket (4) and is movable only in one direction being engaged in the said guidance (8).

6. Device according to claim 5, **characterized in that** the compensation bracket (2) has at least one strip (9, 10) which is overlapped by sprockets (11) of the fixation bracket (4).

7. Device according to claim 6, **characterized in that** the compensation bracket (2) has two parallel strips (9, 10) each of which is overlapped by sprockets (11) of the fixation bracket (4), wherein an upper strip (9) rests on upper sprockets (11) and a lower strip (10) protrudes into lower sprockets (11) to prevent the strips (9, 10) from moving up or down.

8. Device according to one of the preceding claims, **characterized in that** the compensation bracket (2) has two parallel strips (9, 10) between which a flexible tongue (5) is located.

9. Device according to one of the preceding claims, **characterized in that** the DIN rail (3) is plugged on an outer side of the compensation bracket (2).

10. Device according to one of the preceding claims, **characterized in that** the DIN rail (3) is screwed on an outer side of the compensation bracket (2).

11. Cabinet (16) to house circuit breakers, comprising a device (1) according to one of the preceding claims.

## Patentansprüche

1. Vorrichtung (1), umfassend eine DIN-Schiene (3), ein Zwischenelement und mindestens einen Befestigungsbügel (4), der dazu dient, in einem Schrank (16) oder an einer Wand montiert zu sein und die DIN-Schiene (3) zu tragen, die mit dem Befestigungsbügel (4) durch das Zwischenelement verbunden ist, wobei das Zwischenelement ein Ausgleichsbügel (2) ist, der an einem Abschnitt mit dem Befestigungsbügel (4) verbunden ist und an einem anderen Abschnitt mit der DIN-Schiene (3) verbindbar ist, wobei der Ausgleichsbügel (2) beweglich ist und relativ zu dem Befestigungsbügel (4) verschoben werden kann, ohne eine Schraube zu lösen und/oder ohne die Vorrichtung (1) zu demontieren,
**dadurch gekennzeichnet, dass**
der Ausgleichsbügel (2) mindestens eine flexible Zunge (5) aufweist, die dazu ausgelegt ist, gebogen oder bewegt zu werden, um den Ausgleichsbügel (2) und die DIN-Schiene (3) zu lösen und den Ausgleichsbügel (2) und/oder die DIN-Schiene (3) in und/oder relativ zu dem Befestigungsbügel (4) zu verschieben, wobei der Ausgleichsbügel (2) mindestens einen Dorn (12) umfasst, der sich entfernbar und/oder federartig in eine Aussparung (13) des Befestigungsbügels (4) erstreckt, um den Ausgleichsbügel (2) zu verriegeln, wobei die Zunge (5) zwei Laschen (7) aufweist, wobei die zwei Laschen (7) übereinander angeordnet sind und dazu ausgelegt sind, durch ein Werkzeug ergriffen zu werden, um die Zunge (5) zu biegen und den Ausgleichsbügel (2) zu lösen, und wobei der Ausgleichsbügel (2) dazu ausgelegt ist, gelöst zu werden, um unter Verwendung eines Flachschraubendrehers (6) oder eines anderen Mittels, das in der Lage ist, die Laschen (7) ohne Schrauben in Eingriff zu bringen, in dem Befestigungsbügel (4) verschoben zu werden.

2. Vorrichtung nach Anspruch 1, **dadurch gekennzeichnet, dass** die DIN-Schiene (3) mit dem Befestigungsbügel (4) durch den Ausgleichsbügel (2) verbunden ist, wobei der Ausgleichsbügel (2) an einem Abschnitt mit dem Befestigungsbügel (4) und an einem anderen Abschnitt mit der DIN-Schiene (3) verbunden ist und wobei die DIN-Schiene (3) beweglich ist und relativ zu dem Befestigungsbügel (4) verschoben werden kann, ohne eine Schraube zu lösen und/oder ohne die Vorrichtung (1) zu demontieren.

3. Vorrichtung nach Anspruch 1 oder 2, **dadurch gekennzeichnet, dass** der Befestigungsbügel (4) mehrere Aussparungen (13) zum Aufnehmen des Dorns (12) des Ausgleichsbügels (2) an mehreren Positionen des Ausgleichsbügels (2) in und/oder relativ zu dem Befestigungsbügel (4) umfasst.

4. Vorrichtung nach einem der vorhergehenden Ansprüche, **dadurch gekennzeichnet, dass** der Dorn (12) von der Zunge (5) in eine Aussparung (13) des Befestigungsbügels (4) ragt.

5. Vorrichtung nach einem der vorhergehenden Ansprüche, **dadurch gekennzeichnet, dass** der Ausgleichsbügel (2) in einer Führung (8) des Befestigungsbügels (4) in Eingriff ist und nur in einer Richtung beweglich ist, wenn er in der Führung (8) in Eingriff ist.

6. Vorrichtung nach Anspruch 5, **dadurch gekennzeichnet, dass** der Ausgleichsbügel (2) mindestens einen Streifen (9, 10) aufweist, der durch Zähne (11) des Befestigungsbügels (4) überlagert ist.

7. Vorrichtung nach Anspruch 6, **dadurch gekennzeichnet, dass** der Ausgleichsbügel (2) zwei parallele Streifen (9, 10) aufweist, von denen jeder durch Zähne (11) des Befestigungsbügels (4) überlagert ist, wobei ein oberer Streifen (9) auf oberen Zähnen (11) ruht und ein unterer Streifen (10) in untere Zähne (11) ragt, um zu verhindern, dass sich die Streifen (9, 10) auf- oder abbewegen.

8. Vorrichtung nach einem der vorhergehenden Ansprüche, **dadurch gekennzeichnet, dass** der Ausgleichsbügel (2) zwei parallele Streifen (9, 10) aufweist, zwischen denen sich eine flexible Zunge (5) befindet.

9. Vorrichtung nach einem der vorhergehenden Ansprüche, **dadurch gekennzeichnet, dass** die DIN-Schiene (3) an einer Außenseite des Ausgleichsbügels (2) aufgesteckt ist.

10. Vorrichtung nach einem der vorhergehenden Ansprüche, **dadurch gekennzeichnet, dass** die DIN-Schiene (3) an eine Außenseite des Ausgleichsbügels (2) geschraubt ist.

11. Schrank (16) zum Aufnehmen von Leistungsschaltern, umfassend eine Vorrichtung (1) nach einem der vorhergehenden Ansprüche.

## Revendications

1. Dispositif (1), comprenant un rail DIN (3), un élément intermédiaire et au moins un support de fixation (4) destiné à être installé à l'intérieur d'une armoire (16) ou sur un mur et à supporter le rail DIN (3), qui est raccordé au support de fixation (4) par l'élément intermédiaire, l'élément intermédiaire étant un support de compensation (2), qui est raccordé, au niveau d'une section, au support de fixation (4) et peut être raccordé, au niveau d'une autre section, au rail DIN (3), le support de compensation (2) étant déplaçable et pouvant être décalé vis-à-vis du support de fixation (4) sans débloquer une vis et/ou sans démonter le dispositif (1),
**caractérisé en ce que**
le support de compensation (2) comporte au moins une languette flexible (5), qui est conçue pour être courbée ou déplacée pour débloquer le support de compensation (2) et le rail DIN (3) et pour décaler le support de compensation (2) et/ou le rail DIN (3) dans le support de fixation (4) et/ou par rapport à celui-ci, le support de compensation (2) comprenant au moins un crampon (12), qui s'étend de manière amovible et/ou à la manière d'un ressort dans un évidement (13) du support de fixation (4) pour bloquer le support de compensation (2), la languette (5) comportant deux ailettes (7), les deux ailettes (7) étant disposées l'une au-dessus de l'autre, et étant conçues pour qu'un outil entre en prise avec elles pour courber la languette (5) et pour débloquer le support de compensation (2), et le support de compensation (2) étant conçu pour être débloqué pour être décalé dans le support de fixation (4) au moyen d'un tournevis plat (6) ou d'un autre moyen pouvant entrer en prise avec les ailettes (7) sans vissage.

2. Dispositif selon la revendication 1, **caractérisé en ce que** le rail DIN (3) est raccordé au support de fixation (4) par le support de compensation (2), le support de compensation (2) étant raccordé, au niveau d'une section, au support de fixation (4) et, au niveau d'une autre section, au rail DIN (3) et le rail DIN (3) étant déplaçable et pouvant être décalé vis-à-vis du support de fixation (4) sans débloquer une vis et/ou sans démonter le dispositif (1).

3. Dispositif selon la revendication 1 ou 2, **caractérisé en ce que** le support de fixation (4) comprend plusieurs évidements (13) destinés à recevoir le crampon (12) du support de compensation (2) dans plusieurs positions du support de compensation (2) dans le support de fixation (4) et/ou par rapport à celui-ci.

4. Dispositif selon l'une des revendications précédentes, **caractérisé en ce que** le crampon (12) fait saillie à partir de la languette (5) dans un évidement (13) du support de fixation (4).

5. Dispositif selon l'une des revendications précédentes, **caractérisé en ce que** le support de compensation (2) est mis en prise dans un guide (8) du support de fixation (4) et est déplaçable uniquement dans une direction lorsqu'il est en prise dans ledit guide (8) .

6. Dispositif selon la revendication 5, **caractérisé en ce que** le support de compensation (2) comporte au moins une bande (9, 10) qui est chevauchée par des dents (11) du support de fixation (4).

7. Dispositif selon la revendication 6, **caractérisé en ce que** le support de compensation (2) comporte deux bandes (9, 10) parallèles qui sont chacune chevauchées par des dents (11) du support de fixation (4), une bande supérieure (9) étant en appui sur des dents supérieures (11) et une bande inférieure (10) faisant saillie dans des dents inférieures (11) pour empêcher les bandes (9, 10) de se déplacer vers le haut ou le bas.

8. Dispositif selon l'une des revendications précédentes, **caractérisé en ce que** le support de compensation (2) comporte deux bandes (9, 10) parallèles entre lesquelles est située une languette (5) flexible.

9. Dispositif selon l'une des revendications précédentes, **caractérisé en ce que** le rail DIN (3) est emboîté sur un côté extérieur du support de compensation (2) .

10. Dispositif selon l'une des revendications précédentes, **caractérisé en ce que** le rail DIN (3) est vissé sur un côté extérieur du support de compensation (2) .

11. Armoire (16) destinée à contenir des disjoncteurs, comprenant un dispositif (1) selon l'une des revendications précédentes.
